# EUROPEAN PATENT APPLICATION

(11) **EP 4 455 006 A1**
(43) Date of publication of application: **30.10.2024**
(21) Application number: 24171454.2
(22) Date of filing: 19.04.2024
(51) Int. Cl.: B64D 11/00, A47B 31/06, B64D 11/04

(54) **ANTI-TURBULENCE LOCKABLE GALLEY CART**

(30) Priority: 29.04.2023 IN 202341030862; 28.06.2023 US 202318343690
(71) Applicant: B/E Aerospace, Inc., Winston-Salem, NC 27105 (US)
(72) Inventor: MAHABALESHWARA, Aravinda, Hyderabad (IN); MALVIYA, Ankit, Kannod (IN); MORARJI, Amith Ramakanth, Bangalore (IN)
(74) Representative: Dehns

(57) **Abstract**

A galley cart restraint mechanism is provided. The galley cart restraint mechanism including a base portion (310), a post portion (312) coupled to the base portion (310), and a foot portion (314) coupled to the post portion (312). At least the foot portion (314) is configured to engage with a floor track to prevent movement of the galley cart in at least a first direction.

## Description

### CROSS-REFERENCE TO RELATED APPLICATIONS

This application claims priority to, and the benefit of, India Provisional Patent Application No. 202341030862, filed April 29, 2023 (DAS Code 16DB) and titled "ANTI-TURBULENCE LOCKABLE GALLEY CART".

### FIELD

The present disclosure relates to passenger aircraft galley carts, and more specifically, to reducing a movement of such galley carts during turbulence.

### BACKGROUND

Commercial passenger aircraft often feature galley areas where provisions such as food and beverages are stored and prepared for in-flight consumption. These provisions are generally stored in wheeled carts or trolleys, hereinafter referred to as galley carts, that may be quickly loaded and unloaded during aircraft turnarounds, and which may be wheeled around the cabin to serve passengers during a flight. Galley carts are generally stored in galley cart stowage bays, where they are restrained when not in use. When the contents of a galley cart is desired, a cabin attendant may release the restraints and pull the galley cart out the galley cart bay, e.g. using a handle on the galley cart.

### SUMMARY

A galley cart restraint mechanism is disclosed. The galley cart restraint mechanism includes a guide mechanism coupled to a galley cart. The guide mechanism includes a base portion; a post portion coupled to the base portion; and a foot portion coupled to the post portion. At least the foot portion is configured to engage with a floor track to prevent movement of the galley cart in at least a first direction.

In various embodiments, the foot portion is configured to slidably engage with a channel in the floor track. In various embodiments, the channel is configured with a first channel width and a second channel width. In various embodiments, the first channel width is greater than the second channel width. In various embodiments, the channel transitions from the first channel width to the second channel width along a longitudinal length of the floor track. In various embodiments, the first channel width is at an entrance of the floor track. In various embodiments, the foot portion is configured with a first foot portion width. In various embodiments, the first foot portion width is approximately equal to but slightly less than the second channel width. In various embodiments, the channel is configured with a channel height. In various embodiments, the foot portion is configured with a foot portion height. In various embodiments, the foot portion height is approximately equal to but slightly less than the channel height.

In various embodiments, the post portion slidably engages with a top opening in the floor track. In various embodiments, the top opening is configured with a first top opening width and a second top opening width. In various embodiments, the first top opening width is greater than the second top opening width. In various embodiments, the top opening transitions from the first top opening width to the second top opening width along a longitudinal length of the floor track.

In various embodiments, the first direction is a lateral direction in relation to a longitudinal direction of the floor track. In various embodiments, the guide mechanism engages with the floor track to prevent the movement of the galley cart in at least the first direction and a second direction. In various embodiments, the first direction is a lateral direction in relation to a longitudinal direction of the floor track. In various embodiments, the second direction is a vertical direction.

In various embodiments, the galley cart restraint mechanism further includes a locking mechanism. In various embodiments, the galley cart is prevented in moving in a second direction by engaging the locking mechanism. In various embodiments, the second direction is a longitudinal direction in relation to a longitudinal direction of the floor track. In various embodiments, the locking mechanism secures one or more casters associated with the galley cart. In various embodiments,

In various embodiments, the galley cart restraint mechanism further includes a locking mechanism. In various embodiments, the galley cart is prevented in moving in the first direction, a second direction, and a third direction by engaging the locking mechanism. In various embodiments, the first direction is a lateral direction in relation to a longitudinal direction of the floor track. In various embodiments, the second direction is a vertical direction. In various embodiments, the third direction is a longitudinal direction in relation to the longitudinal direction of the floor track. In various embodiments, the locking mechanism is prevented from moving in the first direction, the second direction, and the third direction by a top edge of a foot portion of the guide mechanism frictionally engaging with a top edge of a channel within the floor track.

Also disclosed herein is an aircraft galley. The aircraft galley includes a galley cart; a galley cart stowage bay configured to store the galley cart; a floor track along a length of the galley cart stowage bay and coupled to an aircraft frame structure; and a guide mechanism coupled to the galley cart. The guide mechanism includes a base portion; a post portion coupled to the base portion; and a foot portion coupled to the post portion. At least the foot portion is configured to engage with the floor track to prevent movement of the galley cart in at least a first direction.

In various embodiments, the foot portion is configured to slidably engage with a channel in the floor track. In various embodiments, the channel is configured with a first channel width and a second channel width. In various embodiments, the first channel width is greater than the second channel width. In various embodiments, the channel transitions from the first channel width to the second channel width along a longitudinal length of the floor track. In various embodiments, the first channel width is at an entrance of the floor track. In various embodiments, the foot portion is configured with a first foot portion width. In various embodiments, the first foot portion width is approximately equal to but slightly less than the second channel width. In various embodiments, the channel is configured with a channel height. In various embodiments, the foot portion is configured with a foot portion height. In various embodiments, the foot portion height is approximately equal to but slightly less than the channel height.

In various embodiments, the post portion slidably engages with a top opening in the floor track. In various embodiments, the top opening is configured with a first top opening width and a second top opening width. In various embodiments, the first top opening width is greater than the second top opening width. In various embodiments, the top opening transitions from the first top opening width to the second top opening width along a longitudinal length of the floor track.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIGS. 1A-1B illustrate galley cart stowage bays in accordance with various embodiments.
FIG. 2 illustrates an isometric view of a galley cart restraint mechanism, in accordance with various embodiments
FIGS. 3A and 3B illustrate a cross sectional view and isometric view of a guide mechanism interfacing with a floor track, in accordance with various embodiments.
FIG. 4 illustrates an isometric view of a guide mechanism positioned within a floor track, in accordance with various embodiments.
FIG. 5 illustrates a front view of a guide mechanism positioned within a floor track, in accordance with various embodiments.
FIG. 6 illustrates an isometric view of a guide mechanism positioned within a floor track, in accordance with various embodiments
FIG. 7 illustrates a front view of a guide mechanism positioned within a floor track, in accordance with various embodiments.
FIGS. 8A, 8B, 8C and 8D illustrate components of a locking mechanism, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

In typical commercial passenger aircraft galleys, galley carts are restrained via a restraining mechanism coupled to a galley cabinet that rotates either in a clockwise or counterclockwise direction to secure the galley cart within the galley cart bay. However, during in-flight turbulence, the restraining mechanism may rotate or otherwise release such that the galley cart may translate out the galley cart bay and move about the aircraft cabin.

Disclosed herein is a galley cart restraint mechanism that utilizes a guide mechanism coupled to the galley cart where the guide mechanism engages with a floor track that is securely fastened to aircraft frame structures. In various embodiments, once fully engaged, the guide mechanism reduces lateral movement, in a y-direction or x-direction depending on galley configuration, as well as vertical movement, in a z-direction, of the galley cart. In various embodiments, the guide mechanism of the galley cart may be secured within the floor track via a brake mechanism associated with one or more casters on the galley cart. In various embodiments, the guide mechanism of the galley cart may be secured within the floor track via a locking mechanism associated with the guide mechanism. In various embodiments, the locking mechanism may raise the guide mechanism, in a z-direction, thereby causing a lower portion of the guide mechanism to frictionally interface with an inside of an upper portion of the floor track thereby locking the guide mechanism within the floor track.

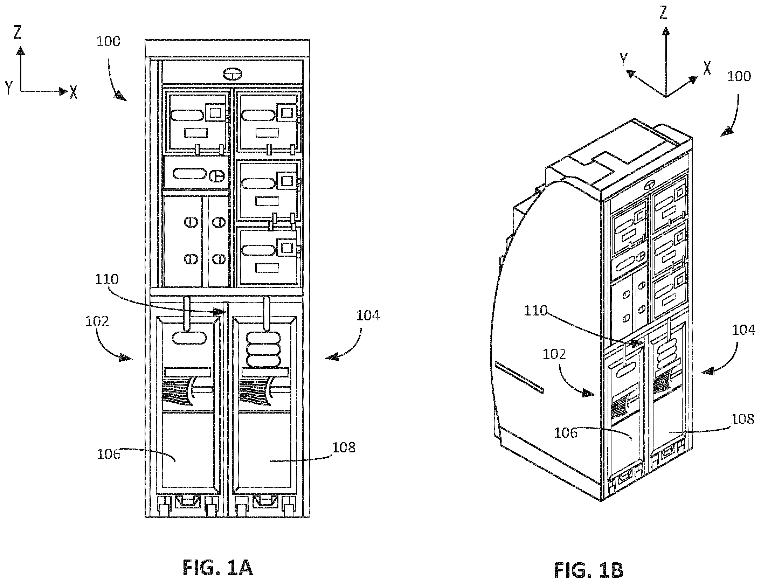

Referring now to the drawings, FIGS. 1A-1B illustrate galley cart stowage bays in accordance with various embodiments. A galley 100 having a plurality of galley cart storage bays, for instance a first galley cart stowage bay 102 and a second galley cart stowage bay 104, may be in an area restricted by surrounding aircraft structures such as a door bustle. The first and second galley cart stowage bays 102, 104 may be at least partially defined by a divider 110 that restricts lateral movement of galley carts 106, 108 within the corresponding the first and second galley cart stowage bays 102, 104. The divider 110 is configured to separate galley cart 106 from galley cart 108 while the aircraft is in motion, while still allowing the galley carts 106, 108 to be removed from the first and second galley cart stowage bays 102, 104. In various embodiments, the motion may be any of 4 natural orientations (e.g., forward-aft, aft-forward, left-right, right-left). The galley 100 may have at least one galley cart stowage bay (e.g., the first galley cart stowage bay 102 and the second galley cart stowage bay 104), or may include double galley cart stowage bays as illustrated. The divider 110 defines a boundary between the first galley cart stowage bay 102 and the second galley cart stowage bay 104.

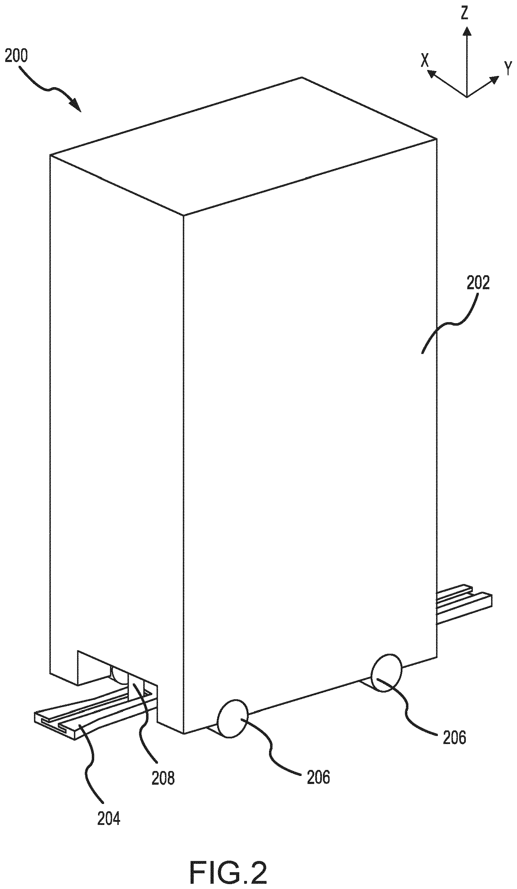

With reference to FIG. 2, an isometric view of a galley cart restraint mechanism is illustrated, in accordance with various embodiments. In various embodiments, the galley cart restraint mechanism 200 includes a galley cart 202 and a floor track 204. In various embodiments, galley cart 202 includes one or more casters 206 on which the galley cart 202 maneuvers, and a guide mechanism 208 that engages with the floor track 204. In that regard, in various embodiments, the floor track 204 is installed in the floor of a galley cart stowage bay, such as the first galley cart stowage bay 102 or the second galley cart stowage bay 104 of FIG. 1. In various embodiments, the floor track 204 is configured to be installed lengthwise from a front of the galley cart stowage bay to a back of the galley cart stowage bay, e.g. in a y-direction. In various embodiments, the floor track 204 is configured to be coupled to aircraft frame structures, i.e. a floor of a cabin of the aircraft. In various embodiments, the floor track 204 may be coupled to the aircraft frame structures with bolts or screws, among other fasteners and attachment mechanisms. In various embodiments, responsive to the galley cart being maneuvered into the galley cart stowage bay, the guide mechanism 208 aligned with and translates, e.g. in a y-direction, into a channel within the floor track 204, detail of which are described hereafter.

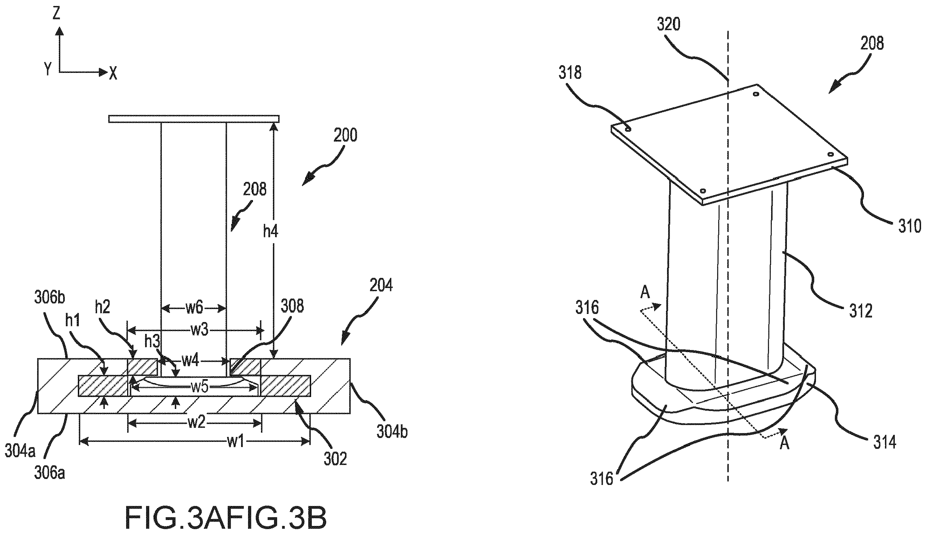

Referring now to FIGS. 3A and 3B, a cross sectional view and isometric view of a guide mechanism interfacing with a floor track is illustrated, in accordance with various embodiments. FIG. 3A is a cross sectional view of the guide mechanism 208 along lines A-A of the guide mechanism 208 illustrated in FIG. 3B. In various embodiments, the floor track 204 may be configured with a channel 302 along a length of the floor track, e.g. in a y-direction, formed between a first side edge 304a and a second side edge 304b and between a bottom edge 306a and a top edge 306b. In various embodiments, the channel 302 has a channel height h1, i.e. in a z-direction, a first channel width w1, e.g. in a x-direction, and a second channel width w2, e.g. in a x-direction. In various embodiments, the first channel width w1 is wider than the second channel width w2. In various embodiments, the first channel width w1 is at a front of the channel 302 and provides an entrance for a portion of the guide mechanism 208 when the galley cart is being maneuvered into the galley cart stowage bay. In various embodiments, the channel 302 transitions in width from the first channel width w1 to the second channel width w2 along a first length, e.g. in the y-direction, of the floor track 204 and continues at the second channel width w2 for the remainder of the length, e.g. in the y-direction, of the floor track 204. In various embodiments, the transition from the first channel width w1 to the second channel width w2 may be up to 6 inches (15.24 centimeters) in length. In various embodiments, the transition from the first channel width w1 to the second channel width w2 may be up to 4 inches (10.16 centimeters) in length. In various embodiments, the transition from the first channel width w1 to the second channel width w2 may be up to 3 inches (7.62 centimeters) in length.

In various embodiments, the transition in the channel 302 is configured to receive a portion of the guide mechanism 208. In various embodiments, the guide mechanism 208 includes a base portion 310, a post portion 312, and a foot portion 314. In that regard, in various embodiments, the transition in the channel 302 is configured to receive the foot portion 314 of the guide mechanism 208. In various embodiments, a fifth foot portion width w5 of the foot portion 314 is approximately equal to but slightly less than the second channel width w2 of the channel 302. In various embodiments, the fifth foot portion width w5 of the foot portion 314 may be between 1/64 inch (0.03969 centimeter) to 1/4 inch (0.635 centimeter) less than the second channel width w2 of the channel 302. In various embodiments, the fifth foot portion width w5 of the foot portion 314 may be between 1/32 inch (0.07938 centimeter) to 3/16 inch (0.4762 centimeter) less than the second channel width w2 of the channel 302. In various embodiments, the fifth foot portion width w5 of the foot portion 314 may be 1/8 inch (0.3175 centimeter) less than the second channel width w2 of the channel 302. In various embodiments, the second channel width w2 has a width-to-width ratio of 1.1:1 with respect to the fifth foot portion width w5.

In various embodiments, the floor track 204 further includes a top opening 308. In various embodiments, the top opening 308 has a top opening height h2, i.e. in a z-direction, a third top opening width w3, e.g. in a x-direction, and a fourth top opening width w4, e.g. in a x-direction. In various embodiments, the top opening height h2 of the top opening 308 is between a top of the channel 302 and the top edge 306b. In various embodiments, the third top opening width w3 is wider than the fourth top opening width w4. In various embodiments, the third top opening width w3 is at a front of the top opening 308 and provides an entrance for a portion of the guide mechanism 208 when the galley cart is being maneuvered into the galley cart stowage bay. In various embodiments, the top opening 308 transitions in width from the third top opening width w3 to the fourth top opening width w4 along a first length, e.g. in the y-direction, of the floor track 204 and continues at the fourth top opening width w4 for the remainder of the length, e.g. in the y-direction, of the floor track 204. In various embodiments, the transition from the third top opening width w3 to the fourth top opening width w4 may be up to 6 inches (15.24 centimeters) in length. In various embodiments, the transition from the third top opening width w3 to the fourth top opening width w4 may be up to 4 inches (10.16 centimeters) in length. In various embodiments, the transition from the third top opening width w3 to the fourth top opening width w4 may be up to 3 inches (7.62 centimeters) in length.

In various embodiments, the transition in the top opening 308 is configured to receive a portion of the guide mechanism 208. In that regard, the transition in the top opening 308 is configured to receive the post portion 312 of the guide mechanism 208. In various embodiments, a sixth post portion width w6 of the post portion 312 is approximately equal to but slightly less than the fourth top opening width w4 of the top opening 308. In various embodiments, the sixth post portion width w6 of the post portion 312 may be between 1/64 inch (0.03969 centimeter) to 1/4 inch (0.635 centimeter) less than the fourth top opening width w4 of the top opening 308. In various embodiments, the sixth post portion width w6 of the post portion 312 may be between 1/32 inch (0.07938 centimeter) to 3/16 inch (0.4762 centimeter) less than the fourth top opening width w4 of the top opening 308. In various embodiments, the sixth post portion width w6 of the post portion 312 may be 1/8 inch (0.3175 centimeter) less than the fourth top opening width w4 of the top opening 308. In various embodiments, the fourth top opening width w4 has a width-to-width ratio of 1.1:1 with respect to the sixth post portion width w6.

In various embodiments, a foot portion height h3 of the foot portion 314 is approximately equal to but slightly less than the channel height h1 of the channel 302. In various embodiments, the foot portion height h3 of the foot portion 314 may be between 1/64 inch (0.03969 centimeter) to 1/4 inch (0.635 centimeter) less than the channel height h1 of the channel 302. In various embodiments, the foot portion height h3 of the foot portion 314 may be between 1/32 inch (0.07938 centimeter) to 3/16 inch (0.4762 centimeter) less than the channel height h1 of the channel 302. In various embodiments, the foot portion height h3 of the foot portion 314 may be 1/8 inch (0.3175 centimeter) less than the channel height h1 of the channel 302. In various embodiments, the channel height h1 has a height-to-height ratio of 1.1:1 with respect to the foot portion height h3.

In various embodiments, the foot portion 314 may be substantially rectangular in shape along an axis 320, i.e. in a z-direction. In various embodiments, the foot portion 314 may be substantially circular in shape along the axis 320. In various embodiments, the foot portion 314 may include chamfered edges 316 along a top portion of the foot portion 314. In various embodiments, the post portion 312 may be substantially rectangular in shape along the axis 320. In various embodiments, the post portion 312 may be substantially circular in shape along the axis 320. In various embodiments, the height h4 of the post portion 312 may differ based on the particular galley cart, such as galley cart 202 of FIG. 2, on which the guide mechanism 208 is installed. In that regard, the height h4 may be sufficient in height such that the foot portion 314 engages with the channel 302 when the galley cart is maneuvered into the galley cart stowage bay. In various embodiments, in a retrofit of a galley cart, the base portion 310 is configured to couple to a bottom of the galley cart. In various embodiments, in a retrofit of a galley cart, the base portion 310 may be configured with a plurality of holes 318 so as to attach the guide mechanism 208 to the galley cart. In various embodiments, the base portion 310 may be substantially rectangular in shape along the axis 320. In various embodiments, the base portion 310 may be substantially circular in shape along the axis 320.

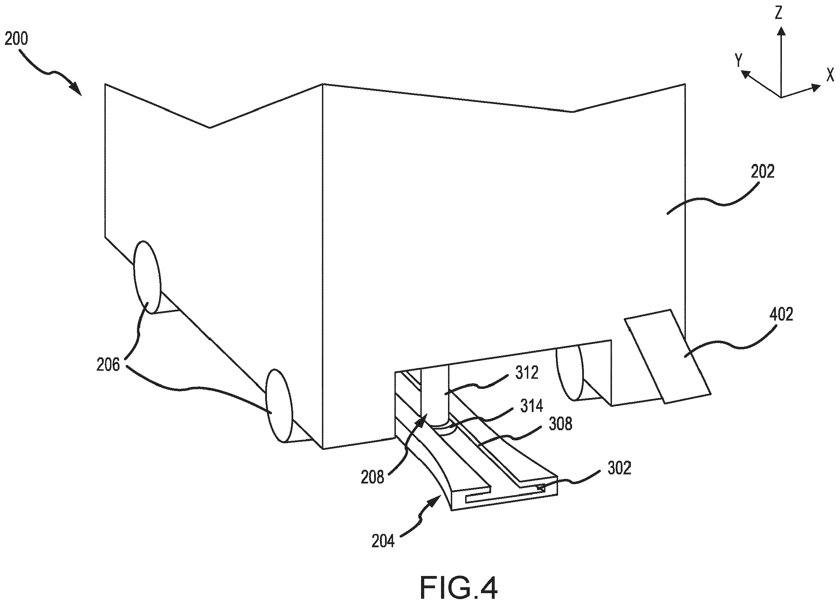

Referring now to FIG. 4, an isometric view of a guide mechanism positioned within a floor track is illustrated, in accordance with various embodiments. In various embodiments, the guide mechanism 208 of the galley cart 202 is positioned within the floor track 204. In various embodiments, the positioning of the guide mechanism 208 within the floor track 204 is accomplished by the foot portion 314 of the guide mechanism 208 translating in a first direction, e.g. in a y-direction, into channel 302 of the floor track 204 and by the post portion 312 of the guide mechanism 208 translating in the first direction, e.g. in a y-direction, into top opening 308 of the floor track 204. In various embodiments, once the guide mechanism 208 of the galley cart 202 is positioned within the floor track 204, the galley cart 202 may be secured by applying locking mechanism 402, which secures, i.e. locks, one or more of casters 206 from rotation, thereby preventing movement of galley cart 202 in the first direction, e.g. in a y-direction. In various embodiments, the guide mechanism 208 provides for a reduction of movement in a second direction, e.g. in a x-direction, as well as vertical movement, i.e. in a z-direction, of the of the galley cart 202 due to the limited width differential between the width w5 of the foot portion 314 and the width w2 of the channel 302 as well as limited height differential between the foot portion height h3 of the foot portion 314 and the channel height h1 of the channel 302 in reference to FIGS. 3A and 3B.

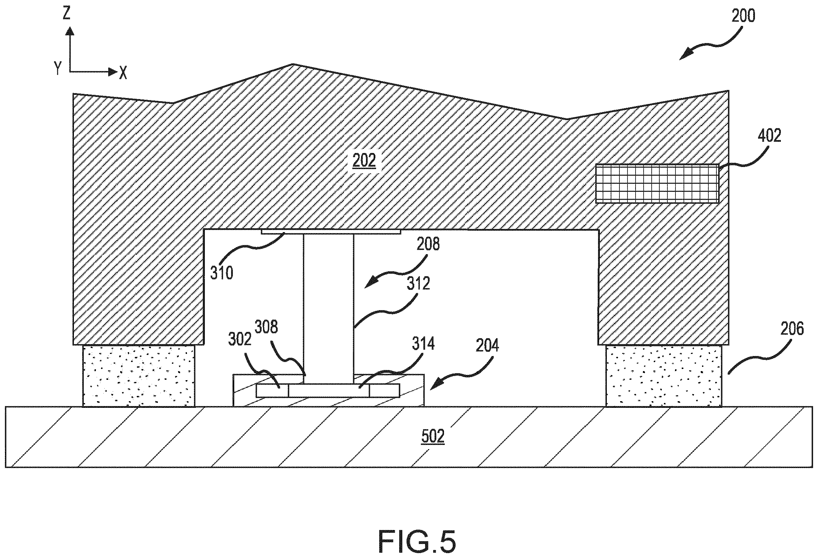

Referring now to FIG. 5, a front view of a guide mechanism positioned within a floor track is illustrated, in accordance with various embodiments. In various embodiments, the floor track 204 is configured to be coupled to aircraft frame structures 502, i.e. a floor of a cabin of the aircraft. In various embodiments, the guide mechanism 208 of the galley cart 202 is positioned within the floor track 204. In various embodiments, the positioning of the guide mechanism 208 within the floor track 204 is accomplished by the foot portion 314 of the guide mechanism 208 translating in the first direction, e.g. in a y-direction, into channel 302 of the floor track 204 and by the post portion 312 of the guide mechanism 208 translating in the first direction, e.g. in a y-direction, into top opening 308 of the floor track 204. In various embodiments, once the guide mechanism 208 of the galley cart 202 is positioned within the floor track 204, the galley cart 202 may be secured by engaging the locking mechanism 402, which secures, i.e. locks, one or more of casters 206 thereby preventing movement of galley cart 202 in the first direction, e.g. in a y-direction. In various embodiments, the guide mechanism 208 provides for a reduction of movement in the second direction, e.g. in a x-direction, as well as vertical movement, i.e. in a z-direction, of the of the galley cart 202 due to the limited width differential between the width w5 of the foot portion 314 and the width w2 of the channel 302 as well as limited height differential between the foot portion height h3 of the foot portion 314 and the channel height h1 of the channel 302 in reference to FIGS. 3A and 3B. In various embodiments, the guide mechanism 208 may be coupled to the galley cart 202 via the base portion 310.

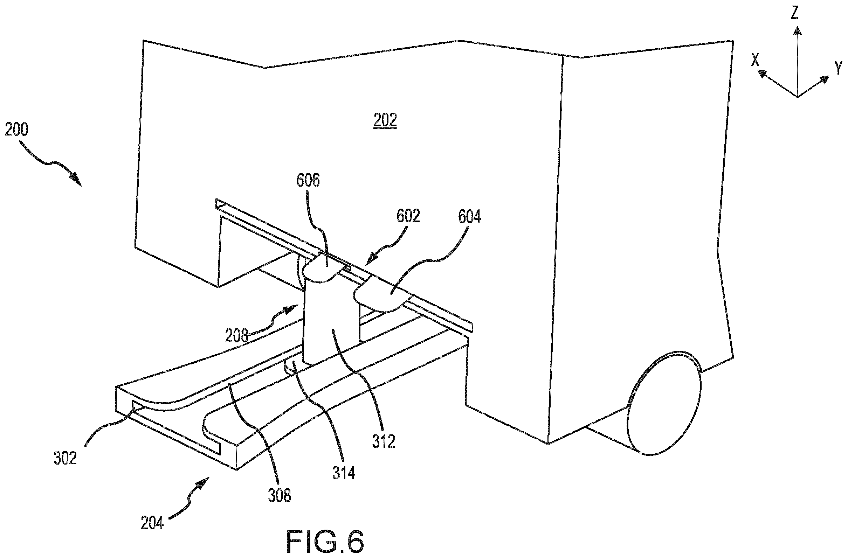

Referring now to FIG. 6, an isometric view of a guide mechanism positioned within a floor track is illustrated, in accordance with various embodiments. In various embodiments, the positioning of the guide mechanism 208 within the floor track 204 is accomplished by the foot portion 314 of the guide mechanism 208 translating in the first direction, e.g. in a y-direction, into channel 302 of the floor track 204 and by the post portion 312 of the guide mechanism 208 translating in the first direction, e.g. in a y-direction, into top opening 308 of the floor track 204. In various embodiments, once the guide mechanism 208 of the galley cart 202 is positioned within the floor track 204, the galley cart 202 may be secured by engaging a locking mechanism 602. In various embodiments, the locking mechanism 602 may be engaged by depressing the lock pedal 604, i.e. in a negative z-direction. In various embodiments, the locking mechanism 602 may be disengaged by depressing the release pedal 606, i.e. in a negative z-direction. In various embodiments, engaging the locking mechanism 602 causes the guide mechanism 208 to translate vertically, i.e. in a positive z-direction, thereby causing a top edge of the foot portion 314 to frictionally engage with a top edge of channel 302. In that regard, in various embodiments, the frictional engagement of the top edge of the foot portion 314 with the top edge of channel 302 provides for a reduction of movement in the second direction, e.g. in a x-direction, as well as vertical movement, i.e. in a z-direction. In various embodiments, a further reduction of movement the second direction, e.g. in a x-direction, as well as vertical movement, i.e. in a z-direction, of the of the galley cart 202 is provided due to the limited width differential between the width w5 of the foot portion 314 and the width w2 of the channel 302 as well as limited height differential between foot portion height h3 of the foot portion 314 and the channel height h1 of the channel 302 in reference to FIGS. 3A and 3B.

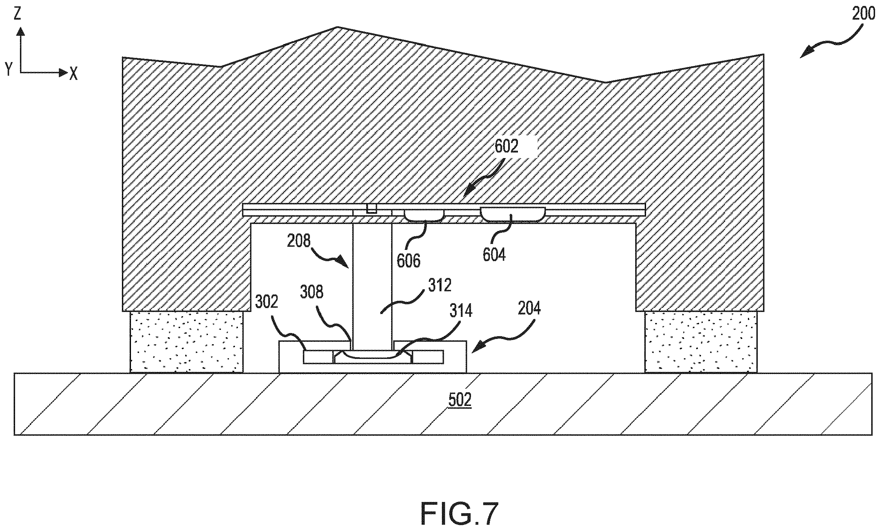

Referring now to FIG. 7, a front view of a guide mechanism positioned within a floor track is illustrated, in accordance with various embodiments. In various embodiments, the floor track 204 is configured to be coupled to aircraft frame structures 502, i.e. a floor of a cabin of the aircraft. In various embodiments, the guide mechanism 208 of the galley cart 202 is positioned within the floor track 204. In various embodiments, the positioning of the guide mechanism 208 within the floor track 204 is accomplished by the foot portion 314 of the guide mechanism 208 translating in the first direction, e.g. in a y-direction, into channel 302 of the floor track 204 and by the post portion 312 of the guide mechanism 208 translating in the first direction, e.g. in a y-direction, into top opening 308 of the floor track 204. In various embodiments, once the guide mechanism 208 of the galley cart 202 is positioned within the floor track 204, the galley cart 202 may be secured by engaging a locking mechanism 602. In various embodiments, the locking mechanism 602 may be engaged by depressing the lock pedal 604, i.e. in a negative z-direction. In various embodiments, the locking mechanism 602 may be disengaged by depressing the release pedal 606, i.e. in a negative z-direction. In various embodiments, engaging the locking mechanism 602 causes the guide mechanism 208 to translate vertically, i.e. in a positive z-direction, thereby causing a top edge of the foot portion 314 to frictionally engage with a top edge of channel 302. In that regard, in various embodiments, the frictional engagement of the top edge of the foot portion 314 with the top edge of channel 302 provides for a reduction of movement in the second direction, e.g. in a x-direction, as well as vertical movement, i.e. in a z-direction. In various embodiments, a further reduction of movement the second direction, e.g. in a x-direction, as well as vertical movement, i.e. in a z-direction, of the of the galley cart 202 is provided due to the limited width differential between the width w5 of the foot portion 314 and the width w2 of the channel 302 as well as limited height differential between foot portion height h3 of the foot portion 314 and the channel height h1 of the channel 302 in reference to FIGS. 3A and 3B.

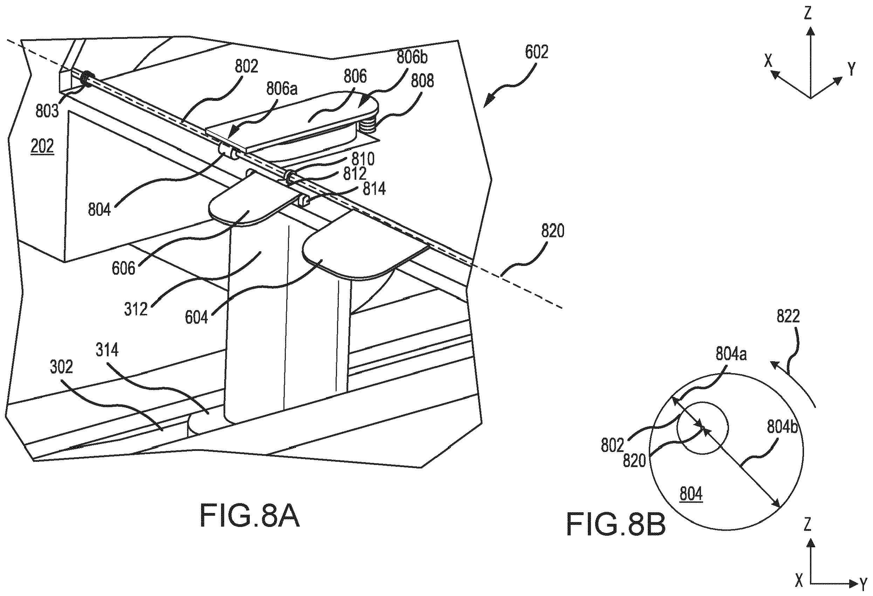

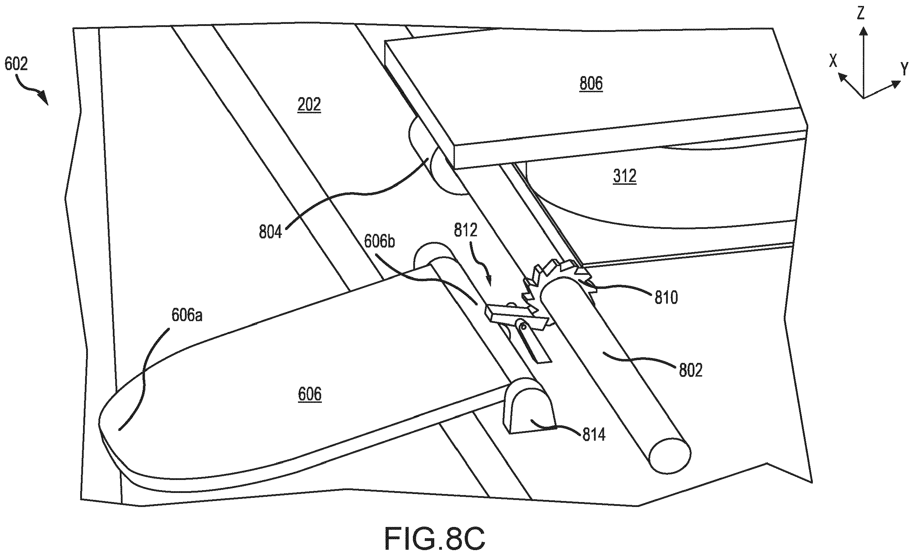

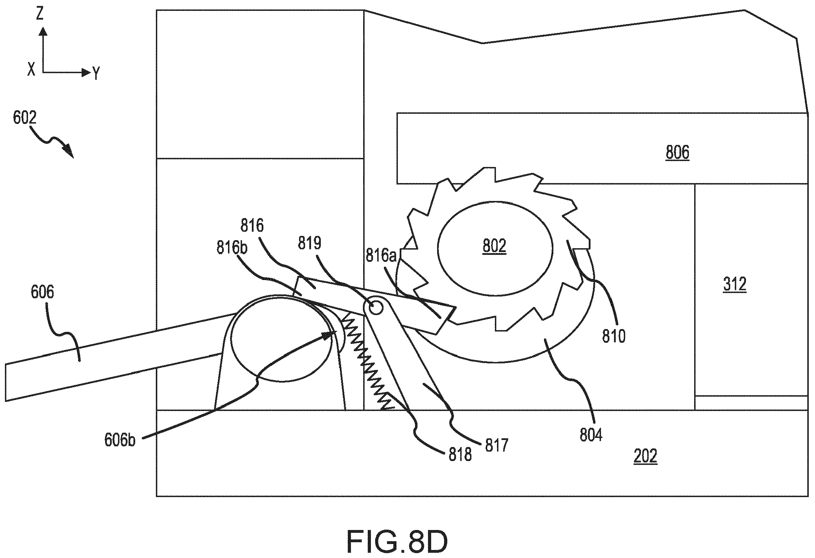

Referring now to FIGS. 8A, 8B, 8C and 8D, components of a locking mechanism are illustrated, in accordance with various embodiments. In various embodiments, the locking mechanism 602 includes the lock pedal 604, the release pedal 606, pivot rod 802, cam 804, guide block 806, guide block spring 808, ratchet 810, and pawl mechanism 812. In various embodiments, the lock pedal 604 is coupled to the pivot rod 802 and, when depressed, in a negative z-direction, rotates pivot rod 802 about axis of rotation 820. In various embodiments, the pivot rod 802 may be coupled to a torsion spring 803. In various embodiments, in rotating the pivot rod 802, cam 804 is rotated about axis of rotation 820 in a counterclockwise direction 822, which compresses the torsion spring 803. In various embodiments, cam 804 may be oblong in shape. In various embodiments, cam 804 may be cylindrical in shape and mounted non-coaxially with the pivot rod 802 such that one side of the cylinder has a longer radius from the axis of rotation 820 of the pivot rod 802, so as to have a first dimension 804a and a second dimension 804b, where the second dimension 804b is wider in length than the first dimension 804a. In various embodiments, when the lock pedal 604 is depressed in the negative z-direction, the pivot rod 802 rotates, causing the second dimension 804b of the cam 804 to rotate a counterclockwise direction 822 thereby raising a distal end 806a of the guide block 806 upward in the positive z-direction. In various embodiments, the guide block 806 is mechanically coupled to the post portion 312 of the guide mechanism 208. In that regard, in various embodiments, the guide block 806 may be considered as the base portion 310 of the guide mechanism 208 and the post portion 312 translates in a z-direction through a bottom of the galley cart 202. In various embodiments, by raising a distal end 806a of the guide block 806 upward in the positive z-direction, the post portion 312 is translated vertically, i.e. in a positive z-direction, thereby causing a top edge of the foot portion 314 to frictionally engage with a top edge of channel 302. In that regard, in various embodiments, the frictional engagement of the top edge of the foot portion 314 with the top edge of channel 302 provides for a reduction of movement in the second direction, e.g. in a x-direction, as well as vertical movement, i.e. in a z-direction. In various embodiments, in raising the distal end 806a of the guide block 806 upward in the positive z-direction, the proximal end 806b of the guide block 806 may be lowered in the negative z-direction thereby compressing the guide block spring 808.

In various embodiments, as the pivot rod 802 rotates in the counterclockwise direction 822, the ratchet 810 also rotates in the counterclockwise direction 822. In various embodiments, the ratchet 810 includes a set of teeth that engage with pawl mechanism 812. In various embodiments, the pawl mechanism 812 includes pawl 816, pivot mechanism 817, and tension spring 818. In various embodiments, pawl 816 is coupled to pivot mechanism 817 and is configured to pivot about pivot point 819. In various embodiments, a proximal end 816a of the pawl 816 engages with, at a given instance, a tooth of the set of teeth of ratchet 810 and a distal end 816b of the pawl 816 engages with the release pedal 606. In various embodiments, tension spring 818 is coupled to the bottom of the galley cart 202 on one end and is coupled to the distal end 816b of the pawl 816. In various embodiments, the tension spring 818 pulls, in a substantially negative z-direction, the distal end 816b of the pawl 816 so as to keep the proximal end 816a of the pawl 816 engaged with, at a given instance, a tooth of the set of teeth of the ratchet 810. In that regard, as the pivot rod 802 rotates in the counterclockwise direction 822, the engagement of the pawl 816 with the set of teeth of the ratchet 810 prevents the pivot rod from rotating in a clockwise direction.

In various embodiments, the locking mechanism 602 may be disengaged by depressing a distal end 606a of the release pedal 606, i.e. in a negative z-direction. In various embodiments, the proximal end 606b of the release pedal rotates about a pivot 814. In various embodiments, the proximal end 606b has a cam configuration similar to cam 804. In that regard, the proximal end 606b is cylindrical in shape and affixed in an off-center configuration, with respect to the pivot 814, so as to have a first dimension and a second dimension, where the second dimension is wider in length than the first dimension. In various embodiments, when the distal end 606a of the release pedal 606 is depressed in the negative z-direction, the proximal end 606b of the release pedal 606 rotates causing the second dimension of the cam portion of the proximal end 606b to rotate a counterclockwise direction 822 thereby raising the distal end 816b of the pawl 816 upward in the positive z-direction and causing the proximal end 816a of the pawl 816 to disengage with the set of teeth of the ratchet 810. In various embodiments, by the proximal end 816a of the pawl 816 disengaging with the set of teeth of the ratchet 810, the torsion spring 803 decompresses thereby rotating the pivot rod 802 clockwise direction opposite the counterclockwise direction 822 thereby rotating the cam 804 back to its original position. In that regard, the guide block spring 808 decompresses thereby raising the proximal end 806b of the guide block 806 and lowering the distal end 806a of the guide block 806 downward in the negative z-direction and translating the post portion 312 of the guide mechanism 208 vertically, i.e. in a negative z-direction, thereby causing a top edge of the foot portion 314 to frictionally disengage with a top edge of channel 302.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A galley cart restraint mechanism, comprising:
a guide mechanism (208) coupled to a galley cart, the guide mechanism (208) comprising:
a base portion (310);
a post portion (312) coupled to the base portion (310); and
a foot portion (314) coupled to the post portion (312), wherein at least the foot portion (314) is configured to engage with a floor track to prevent movement of the galley cart in at least a first direction.

2. The galley cart restraint mechanism of claim 1, wherein the foot portion (314) is configured to slidably engage with a channel (302) in the floor track.

3. The galley cart restraint mechanism of claim 2, wherein the channel (302) is configured with a first channel width and a second channel width, wherein the first channel width is greater than the second channel width, and wherein the channel (302) transitions from the first channel width to the second channel width along a longitudinal length of the floor track.

4. The galley cart restraint mechanism of claim 3, wherein the first channel width is at an entrance of the floor track.

5. The galley cart restraint mechanism of claim 3, wherein the foot portion (314) is configured with a first foot portion width and wherein the first foot portion width is approximately equal to but slightly less than the second channel width.

6. The galley cart restraint mechanism of claim 2, wherein the channel (302) is configured with a channel height, wherein the foot portion (314) is configured with a foot portion height, and wherein the foot portion height is approximately equal to but slightly less than the channel height.

7. The galley cart restraint mechanism of claim 2, wherein the post portion (312) slidably engages with a top opening in the floor track, and optionally wherein the top opening is configured with a first top opening width and a second top opening width, wherein the first top opening width is greater than the second top opening width, and wherein the top opening transitions from the first top opening width to the second top opening width along a longitudinal length of the floor track.

8. The galley cart restraint mechanism of any preceding claim, wherein the first direction is a lateral direction in relation to a longitudinal direction of the floor track.

9. The galley cart restraint mechanism of any preceding claim, wherein the guide mechanism (208) engages with the floor track to prevent the movement of the galley cart in at least the first direction and a second direction, wherein the first direction is a lateral direction in relation to a longitudinal direction of the floor track and wherein the second direction is a vertical direction.

10. The galley cart restraint mechanism of any preceding claim, further comprising:
a locking mechanism (402), wherein the galley cart is prevented in moving in a second direction by engaging the locking mechanism (402) and wherein the second direction is a longitudinal direction in relation to a longitudinal direction of the floor track.

11. The galley cart restraint mechanism of claim 10, wherein the locking mechanism (402) secures one or more casters associated with the galley cart.

12. The galley cart restraint mechanism of any of claims 1-9, further comprising:
a locking mechanism (402), wherein the galley cart is prevented in moving in the first direction, a second direction, and a third direction by engaging the locking mechanism (402), wherein the first direction is a lateral direction in relation to a longitudinal direction of the floor track, wherein the second direction is a vertical direction, and wherein the third direction is a longitudinal direction in relation to the longitudinal direction of the floor track, and optionally wherein the locking mechanism (402) is prevented from moving in the first direction, the second direction, and the third direction by a top edge of the foot portion of the guide mechanism (208) frictionally engaging with a top edge of a channel within the floor track.

13. An aircraft galley comprising:
a galley cart;
a galley cart stowage bay configured to store the galley cart;
a floor track along a length of the galley cart stowage bay and coupled to an aircraft frame structure; and
a galley cart restraint mechanism as claimed in claim 1.

14. The aircraft galley of claim 13, wherein the foot portion (314) is configured to slidably engage with a channel (302) in the floor track.

15. The aircraft galley of claim 14, wherein the channel (302) is configured with a first channel width and a second channel width, wherein the first channel width is greater than the second channel width, wherein the channel (302) transitions from the first channel width to the second channel width along a longitudinal length of the floor track, wherein the first channel width is at an entrance of the floor track, wherein the foot portion (314) is configured with a first foot portion width, and wherein the first foot portion width is approximately equal to but slightly less than the second channel width; and/or
wherein the channel (302) is configured with a channel height, wherein the foot portion (314) is configured with a foot portion height, and wherein the foot portion height is approximately equal to but slightly less than the channel height; and/or
wherein the post portion (312) slidably engages with a top opening in the floor track, and optionally wherein the top opening is configured with a first top opening width and a second top opening width, wherein the first top opening width is greater than the second top opening width, and wherein the top opening transitions from the first top opening width to the second top opening width along a longitudinal length of the floor track.
